# EUROPEAN PATENT SPECIFICATION

(11) **EP 3 175 010 B1**
(45) Date of publication and mention of the grant of the patent: **25.03.2020**
(21) Application number: 15744320.1
(22) Date of filing: 28.07.2015
(51) Int. Cl.: C22C 23/00, C22C 23/02, C22C 23/04, C22C 23/06, E21B 33/12, E21B 34/06, B22D 21/04, B22D 21/00

(54) **CORRODIBLE DOWNHOLE ARTICLE**
KORRODIERBARER BOHRLOCHARTIKEL
ARTICLE DE FOND DE TROU POUVANT ÊTRE CORRODÉ

(30) Priority: 28.07.2014 GB 201413327
(43) Date of publication of application: 07.06.2017
(73) Proprietor: Magnesium Elektron Limited, Manchester M27 8LN (GB)
(72) Inventor: WILKS, Timothy, Manchester M27 8DD (GB); TURSKI, Mark, Manchester M27 8DD (GB)
(74) Representative: Murgitroyd & Company
(86) International application number: PCT/GB2015/052169
(87) International publication number: WO 2016/016628

(56) References cited:
- EP-A1- 0 470 599
- EP-A1- 2 088 217
- CN-A- 101 392 345
- CN-A- 103 343 271
- CN-A- 103 602 865
- CN-A- 103 898 384
- KR-A- 20130 023 707
- US-A1- 2012 103 135
- US-A1- 2012 318 513
- US-A1- 2013 047 785
- US-A1- 2014 190 705
- GONZÃ LEZ S ET AL: "Influence of processing route on microstructure and mechanical properties of two Mg Ni Y RE alloys", MATERIALS CHARACTERIZATION, ELSEVIER, NEW YORK, NY, US, vol. 64, 1 December 2011 (2011-12-01), pages 53-61, XP028450807, ISSN: 1044-5803, DOI: 10.1016/J.MATCHAR.2011.12.001 [retrieved on 2011-12-10]
- DMITRI V. LOUZGUINE-LUZGIN ET AL: "Influence of Ni, Cu, Zn and Al Additions on Glass-Forming Ability and Mechanical Properties of Mg-Y-Mm (Mm=Mischmetal) Alloys", MATERIALS SCIENCE FORUM, vol. 350-351, 1 January 2000 (2000-01-01), pages 123-130, XP055221141, DOI: 10.4028/www.scientific.net/MSF.350-351.123
- KING, JOHN F.; LYON, PAUL; SAVAGE, KEN KING, JOHN F.; LYON, PAUL; SAVAGE, KEN: "Influence of rare earth elements and minor additions on properties and performance of magnesium-yttrium alloys in critical aerospace applications", ANNUAL WORLD MAGNESIUM CONFERENCE, PROCEEDINGS, 59TH, MONTREAL, QC, CANADA, MAY 19-21, CODEN: 69DIZX CODEN: 69DIZX, 1 January 2002 (2002-01-01), pages 15-21, XP009186722,
- BLAWERT C ET AL: "Magnesium secondary alloys: Alloy design for magnesium alloys with improved tolerance limits against impurities", CORROSION SCIENCE, OXFORD, GB, vol. 52, no. 7, 1 July 2010 (2010-07-01), pages 2452-2468, XP027051331, ISSN: 0010-938X [retrieved on 2010-04-14]
- WANG HAI-GANG ET AL: "Effect of Ni on microstructures and mechanical properties of AZ102 magnesium alloys", ZHUZAO = FOUNDRY, SHENYANG ZHUZAO YANJIUSUO, CN, vol. 62, no. 4, 1 January 2013 (2013-01-01), pages 315-318, XP009188288, ISSN: 1001-4977
- KIM J-G ET AL: "Effect of aluminum on the corrosion characteristics of Mg-4Ni-xAl alloys", CORROSION, NACE, vol. 59, no. 3, 1 January 2003 (2003-01-01), pages 228-237, XP009188292, ISSN: 0010-9312
- UNSWORTH WILLIAM ET AL: "A new magnesium alloy system", LIGHT METAL AGE, FELLOM, SAN FRANCISCO, CA, US, vol. 37, no. 7-8, 1 January 1979 (1979-01-01), pages 29-32, XP009188293, ISSN: 0024-3345
- GENG J ET AL: "Enhanced age-hardening response of Mg-Zn alloys via Co additions", SCRIPTA MATERIALIA, ELSEVIER, AMSTERDAM, NL, vol. 64, no. 6, 1 March 2011 (2011-03-01), pages 506-509, XP027590512, ISSN: 1359-6462 [retrieved on 2011-01-10]
- ZHU H M ET AL: "Microstructure and mechanical properties of Mg6ZnCu0.6Zr (wt.%) alloys", JOURNAL OF ALLOYS AND COMPOUNDS, ELSEVIER SEQUOIA, LAUSANNE, CH, vol. 509, no. 8, 22 December 2010 (2010-12-22), pages 3526-3531, XP028131576, ISSN: 0925-8388, DOI: 10.1016/J.JALLCOM.2010.12.165 [retrieved on 2010-12-28]
- G. SONG ET AL: "Understanding Magnesium Corrosion-A Framework for Improved Alloy Performance", ADVANCED ENGINEERING MATERIALS., vol. 5, no. 12, 30 December 2003 (2003-12-30), pages 837-858, XP055221644, DE ISSN: 1438-1656, DOI: 10.1002/adem.200310405
- ZHANG Z ET AL: "Synthesis of disintegrable metal composite for oilfield applications", MAGNESIUM TECHNOLOGY (MAGNESIUM TECHNOLOGY 2013 - TMS 2013 ANNUAL MEETING AND EXHIBITION 20130303 TO 20130307 SAN ANTONIO, TX),, 1 January 2013 (2013-01-01), pages 299-303, XP009186683, ISBN: 978-1-118-60552-3

## Description

This invention relates to a corrodible downhole article comprising a magnesium alloy and the use of the article.

### Background

The oil and gas industries utilise a technology known as hydraulic fracturing or "fracking". This normally involves the pressurisation with water of a system of boreholes in oil and/or gas bearing rocks in order to fracture the rocks to release the oil and/or gas.

In order to achieve this pressurisation, valves may be used to separate different sections of a borehole system. These valves are referred to as downhole valves, the word downhole being used in the context of the invention to refer to an article that is used in a well or borehole.

One way of forming such valves involves the use of spheres of material known as fracking balls to seal off parts of a borehole. Fracking balls may be made from aluminium, magnesium, polymers or composites.

A problem with the use of fracking balls relates to how they are removed once the fracking operation has been completed in order to allow fluid to flow through the well or borehole. One way of doing this is to drill through the fracking ball. However, this type of drilling process can hamper production, as well as being expensive, difficult and therefore undesirable.

One proposed solution to this problem has been to form the fracking ball from a material that will dissolve or corrode under the conditions in the well or borehole. An issue that needs to be considered in relation to such corrodible articles is ensuring that they corrode at a rate which allows them to remain useable for the time period during which they are required to perform their function, but that allows them to corrode or dissolve afterwards.

Degradable polymers have been used in order to provide a corrodible article for use in such methods. However, these polymers do not generally have particularly high mechanical strength.

An alternative corrodible article is described in US patent no 8,425,651 in the name of Xu et al. This document describes a powder metal composite comprising a nanomatrix, preferably made of Al or Ni or a combination thereof, in which are dispersed a plurality of first particles, a plurality of second particles and a solid-state bond layer. The first particles comprise Mg, Al, Zn or Mn, or a combination thereof, and the second particles comprise carbon nanoparticles. The composite may be produced by forming a powder mixture of the required components and then applying temperature and pressure to the powder to sinter and deform (but not melt) the composite in order to form a powder composite. A problem with such powder metallurgical methods is that they are complicated and expensive.

A further corrodible article is described in US patent application publication no 2012/0318513 in the name of Mazyar et al. In this document, the corrodible article is described as having a corrodible core and a metallic layer covering the core. The core material is described as being a magnesium alloy. However, it appears that the combination of magnesium and one or more other materials in a form which is not an alloy is also intended to be covered by the use of the term "alloy" in Mazyar et al. For example, this document refers to alloys of magnesium with tungsten, whereas it is actually not technically feasible to form a magnesium-tungsten alloy. Similarly, Mazyer et al also mentions powders of magnesium coated with a metal oxide as being useful for forming the core, which again would not be magnesium "alloys". Thus, Mazyar et al appears to utilise the term "magnesium alloy" to mean any way in which magnesium and another metal are combined. The metallic layer is described as including aluminium or nickel.

A dissolvable wellbore isolation device is described in US patent application publication no 2014/0124216 in the name of Halliburton Energy Services, Inc.. Although there is minimal description on how the device is made, it appears that again a powder composite is formed instead of an "alloy". In addition, this document only mentions magnesium as one of a large list of components, with magnesium not being one of the preferred components. The device also requires the presence of an "electrolytic compound" which dissolves in the fluid in the wellbore. Similarly, related US patent application publication no 2014/0190705, also in the name of Halliburton Energy Services, Inc., only mentions magnesium as one of a large list of components, with magnesium not being one of the preferred components. This document also requires the presence of an "electrolytic compound" which dissolves in the fluid in the wellbore.

Although casting, forging and machining are described in Mazyar et al, these are only mentioned in very general terms (eg method steps and heating temperatures are not stated) and the structure of the resulting materials is not described. In addition, the preferred method of forming the corrodible article is by compressing the powder into the desired shape, for example by cold compression using a isostatic press. As noted above, such powder metallurgical methods are complicated and expensive. In addition, the resulting powder composites can have poor mechanical properties.

CN 103 343 271 A discloses a light and pressure-proof fast-decomposed cast magnesium alloy which can be used as a tripping ball material for a multi-stage sliding sleeve staged-fracturing technique. CN 101 392 345 A discloses a nickel-containing heat resisting magnesium-rare earth alloy. S. GONZÃLEZ et al., "Influence of processing route on microstructure and mechanical properties of two Mg Ni Y RE alloys", MATERIALS CHARACTERIZATION vol. 64, pages 53-61 (2012, ISSN: 1044-5803, DOI: 10.1016/J.MATCHAR.2011.12.001) discloses Mg-Ni-Y-CeMM alloys. D. V. LOUZGUINE at al. "Influence of Ni, Cu, Zn and Al Additions on Glass-Forming Ability and Mechanical Properties of Mg-Y-Mm (Mm=Mischmetal) Alloys", MATERIALS SCIENCE FORUM, vol. 350-351, pages 123-130 (2000, DOI: 10.4028/ www.scientific.net/MSF.350-351.123) discloses Mg-Y-Mm-(Ni, Cu, Zn or Al) alloys. J. F. KING, P. LYON, K. SAVAGE "Influence of rare earth elements and minor additions on properties and performance of magnesium-yttrium alloys in critical aerospace applications", ANNUAL WORLD MAGNESIUM CONFERENCE, PROCEEDINGS, 59TH, MONTREAL, QC, CANADA, MAY 19-21, CODEN: 69DIZX CODEN: 69DIZX, 1 January 2002 (2002-01-01), pages 15-21, discloses alloys WE54 and WE43.

Thus, there is a need in the oil and gas industries to provide a corrodible article which provides the desired corrosion characteristics, whilst also having improved mechanical properties, and at a lower cost than can currently be achieved. It is also advantageous for the corrodible article to have a relatively low density (for example, compared to metals in general). This invention seeks to ameliorate these problems.

### Statement of invention

The invention is defined in the appended claims. This invention relates to a corrodible downhole article comprising a magnesium alloy, the magnesium alloy comprising:
(a) 0.01-10wt% of one or more of Ni, Co, Ir, Au, Pd or Cu,
(b) 1-10wt% Y,
(c) 1-15wt% of at least one rare earth metal other than Y, and
(d) 0-1wt% Zr,
wherein the remainder of the alloy is magnesium and incidental impurities, and wherein the alloy has a corrosion rate of at least 50mg/cm²/day in 15% KCl at 93°C and a 0.2% proof strength of at least 50MPa when tested using standard tensile test method ASTM B557-10.

In relation to this invention, the term "alloy" is used to mean a composition made by mixing and fusing two or more metallic elements by melting them together, mixing and re-solidifying them.

The term "rare earth metals" is used in relation to the invention to refer to the fifteen lanthanide elements, as well as Sc and Y.

The magnesium alloy comprises one or more of Ni, Co, Ir, Au, Pd or Cu. In some embodiments, Ni is preferred. These metallic elements promote the corrosion of the alloy. In all embodiments, the alloy comprises one or more of Ni, Co, Ir, Au, Pd or Cu, more preferably Ni, in an amount of between 0.01% and 10% by weight (wt%), and in some embodiments more preferably between 0.1% and 10% by weight, even more preferably between 0.2 % by weight and 8% by weight.

Particularly preferred combinations of metals in the magnesium alloy include Mg-Y-RE-Zr. These additional elements can be included by forming an alloy of magnesium with those elements, and then adding a corrosion promoting metallic element (ie Ni, Co, Ir, Au, Pd and/or Cu) to the molten alloy.

In a first embodiment of the disclosure, which corresponds to the invention, the magnesium alloy comprises (a) 0.01-10wt% of one or more of Ni, Co, Ir, Au, Pd or Cu, (b) 1-10wt% Y, (c) 1-15wt% of at least one rare earth metal other than Y, and (d) 0-1wt% Zr.

In the first embodiment, the magnesium alloy comprises one or more rare earth metals other than Y in an amount of 1-15wt%, more preferably in an amount of 1-10wt%, even more preferably in an amount of 1.5-5.0wt%. A preferred rare earth metal other than Y is Nd. A particularly preferred amount of Nd in the alloy is 1.7-2.5wt%, more preferably 2.0-2.3wt%.

In the first embodiment, the magnesium alloy comprises Y in an amount of 1-10wt%, preferably in an amount of 2.0-6.0wt%, more preferably in an amount of 3.0-5.0wt%, even more preferably in an amount of 3.3-4.3wt% or 3.7-4.3wt%.

In the first embodiment, the magnesium alloy comprises Zr in an amount of up to 1wt%. In some embodiments, the magnesium alloy comprises Zr in an amount of 0.05-1.0wt%, more preferably in an amount of 0.2-1.0wt%, even more preferably in an amount of 0.3-0.6wt%. In some embodiments, the magnesium alloy comprises Zr in an amount of up to 0.6wt%, preferably up to 0.3wt%, more preferably up to 0.15wt%. In some embodiments, the magnesium alloy is substantially free of Zr (eg the magnesium alloy comprises less than 0.05wt% Zr).

For the first embodiment, the remainder of the alloy is magnesium and incidental impurities.

A particularly preferred composition of the first embodiment is a magnesium alloy comprising 3.3-4.3wt% Y, 0.2-1.0wt% Zr, 2.0-2.5wt% Nd and optionally 0.3-1.0wt% other rare earths with Ni as the corrosion promoting metallic element. An alternative preferred composition of the first embodiment is a magnesium alloy comprising 3.3-4.3wt% Y, up to 0.2wt% Zr, 1.7-2.5wt% Nd and optionally 0.3-1.0wt% other rare earths with Ni as the corrosion promoting metallic element.

In the first embodiment, the magnesium alloy preferably comprises Ni in an amount of between 0.01% and 10% by weight, more preferably between 0.1% and 8% by weight, even more preferably between 0.2% by weight and 7% by weight. A further particularly preferred composition is a magnesium alloy comprising 3.3-4.3wt% Y, 0.2-1.0wt% Zr, 2.0-2.5wt% Nd and 0.2-7wt% Ni. An alternative further particularly preferred composition is a magnesium alloy comprising 3.3-4.3wt% Y, 0.2wt% or less Zr, 1.7-2.5wt% Nd and 0.2-7wt% Ni. It is preferred that the remainder of the alloy is magnesium and incidental impurities.

Also described (but not claimed) is a second magnesium alloy comprising (a) 0.01-10wt% of one or more of Ni, Co, Ir, Au, Pd or Cu, (b) 1-15wt% Al, (c) 0.1-1wt% Mn, and (d) optionally one or more of Ca, Sn and Zn.

In the second alloy, the magnesium alloy comprises 1-15wt% Al, preferably 2-12wt% Al, more preferably 2.5-10wt% Al.

In the second alloy, the magnesium alloy comprises 0.1-1wt% Mn, preferably 0.1-0.8wt% Mn, more preferably 0.2-0.6wt% Mn.

In the second alloy, the magnesium alloy optionally comprises one or more of Ca, Sn and Zn. When the alloy comprises Sn, it is preferably in an amount of 2-6wt%, more preferably 3-5wt%. When the alloy comprises Zn, it is preferably in an amount of 0.1-3wt%, more preferably 0.2-2.5wt%. In some alloys, the alloy comprises both Sn and Zn. When the alloy comprises Ca, it is preferably in an amount of 1-10wt%, more preferably 2-6wt%.

In the second alloy, the magnesium alloy preferably comprises Ni in an amount of between 0.01% and 10% by weight, more preferably between 0.01% and 5% by weight, even more preferably between 0.1% by weight and 3% by weight.

In addition, described (but not claimed) is a third magnesium alloy comprising (a) 0.01-15wt% of one or more of Ni, Co, Ir, Au, Pd or Cu, (b) 1-9wt% Zn, and (c) optionally one or more of Mn and Zr.

In the third alloy, the magnesium alloy comprises 1-9wt% Zn, preferably 5-8wt% Zn, more preferably 6-7wt% Zn.

In the third alloy, when the alloy comprises Mn it is preferably in an amount of 0.1-1wt%, more preferably 0.5-1.0wt%, even more preferably 0.7-0.9wt%.

In the third alloy, the magnesium alloy preferably comprises Ni in an amount of between 0.01% and 10% by weight, more preferably between 0.01% and 7% by weight, even more preferably between 0.1% by weight and 5% by weight.

In the third alloy, the magnesium alloy may also comprise Cu, preferably in an amount of 0.1-5wt%, more preferably 0.5-3wt%, even more preferably 1-2wt%. In some alloys, the alloy comprises both Mn and Cu.

In the third alloy, when the magnesium alloy comprises Zr it is preferably in an amount of up to 1wt%, more preferably in an amount of 0.05-1.0wt%, even more preferably in an amount of 0.2-1.0wt%, more preferably in an amount of 0.3-0.7wt%.

In the second and third alloys, preferably the remainder of the alloy is magnesium and incidental impurities. It is preferred that the content of Mg in the magnesium alloy is preferably at least 80wt%, more preferably at least 85wt%, even more preferably at least 87wt%.

It is preferred that the corrosion promoting metallic element (ie Ni, Co, Ir, Au, Pd and/or Cu) has a solubility of at least 0.1% by weight in molten magnesium at 850°C. Preferably, the corrosion promoting metallic element has a solubility of at least 0.5% by weight in molten magnesium at 850°C, more preferably at least 1% by weight. In some embodiments, it is preferred that the corrosion promoting metallic element has a solubility of at least 1% by weight in the molten magnesium alloy to which it is to be added at 850°C. In relation to the molten material, the term "solubility" is used to mean that the corrosion promoting metallic element dissolves in the molten magnesium or magnesium alloy.

Preferably, the corrosion promoting metallic element has a solubility of less than 0.1% by weight, more preferably less than 0.01% by weight, in solid magnesium at 25°C. In some embodiments, it is preferred that the corrosion promoting metallic element has a solubility of less than 0.1% by weight, more preferably less than 0.01% by weight, in the solid magnesium alloy to which it is to be added at 25°C. In relation to the solid material, the term "solubility" is used to mean that atoms of the corrosion promoting metallic element are randomly distributed throughout the alloy in a single phase (ie rather than forming a separate phase).

The magnesium alloy preferably has a corrosion rate of at least 50mg/cm²/day, preferably at least 75mg/cm²/day, even more preferably at least 100mg/cm²/day, in 3% KCl at 38°C (100F). It is preferred that the magnesium alloy has a corrosion rate of at least 75mg/cm²/day, preferably at least 250mg/cm²/day, even more preferably at least 500mg/cm²/day, in 15% KCl at 93°C (200F). It is preferred that the corrosion rate, in 3% KCl at 38°C or in 15% KCl at 93°C (200F), is less than 15,000mg/cm²/day.

It is preferred that the magnesium alloy has a 0.2% proof strength of at least 75MPa, more preferably at least 100MPa, even more preferably at least 150MPa, when tested using standard tensile test method ASTM B557-10. It is preferred that the 0.2% proof strength is less than 700MPa. The proof strength of a material is the stress at which material strain changes from elastic deformation to plastic deformation, causing the material to deform permanently.

It is preferred that the 0.2% proof strength of the magnesium alloy when the one or more of Ni, Co, Ir, Au, Pd or Cu has been added is at least 80%, more preferably at least 90%, of the 0.2% proof strength of the base alloy. The term "base alloy" is used to mean the magnesium alloy without one or more of Ni, Co, Ir, Au, Pd or Cu having been added. Even more preferably, the 0.2% proof strength of the magnesium alloy when Ni has been added is at least 80%, more preferably at least 90%, of the 0.2% proof strength of the base alloy.

This invention relates to a corrodible downhole article, such as a downhole tool, comprising the magnesium alloy described above. In some embodiments, the corrodible downhole article is a fracking ball, plug, packer or tool assembly. The fracking ball is preferably substantially spherical in shape. In some embodiments, the fracking ball consists essentially of the magnesium alloy described above.

Also described (but not claimed) is a method for producing a magnesium alloy suitable for use as a corrodible downhole article comprising the steps of:
(a) melting magnesium or a magnesium alloy,
(b) adding one or more of Ni, Co, Ir, Au, Pd or Cu to the molten magnesium or magnesium alloy such that the one or more of Ni, Co, Ir, Au, Pd or Cu melts,
(c) mixing the resulting molten magnesium alloy, and
(d) casting the magnesium alloy.

Preferably the method is for producing a magnesium alloy as defined above. It is preferred that the melting step is carried out at a temperature of 650°C (ie the melting point of pure magnesium) or more, preferably less than 1090°C (the boiling point of pure magnesium). A preferred temperature range is 650°C to 850°C, more preferably 700°C to 800°C, most preferably about 750°C.

The casting step normally involves pouring the molten magnesium alloy into a mould, and then allowing it to cool and solidify. The mould may be a die mould, a permanent mould, a sand mould, an investment mould, a direct chill casting (DC) mould, or other mould.

After step (c), the method may comprise one or more of the following additional steps: (d) extruding, (e) forging, (f) rolling, (g) machining.

It is preferred that step (a) comprises melting a magnesium alloy. Preferably the magnesium alloy of step (a) comprises one or more of Al, Zn, Mn, Zr, Y, rare earth metals, Cu, Nd, Gd, Ca, Sn and/or Ag. Particularly preferred magnesium alloys for step (a) include Mg-Al-Zn-Mn, Mg-Al-Mn, Mg-Zn-Zr, Mg-Y-RE-Zr, Mg-Zn-Cu-Mn, Mg-Nd-Gd-Zr, Mg-Ag-RE-Zr, Mg-Zn-RE-Zr, Mg-Gd-Y-Zr, Mg-Al-Ca-Mn and Mg-Al-Sn-Zn-Mn. As noted above, these additional elements can be included by forming an alloy of magnesium with those elements, and then adding the corrosion promoting metallic element to the molten alloy.

In a first embodiment, the magnesium alloy comprises 1-10wt% Y, 1-15wt% rare earths other than Y and up to 1wt% Zr. A particularly preferred magnesium alloy comprises 3.3-4.3wt% Y, up to 1wt% Zr, 2.0-2.5wt% Nd and optionally 0.3-1.0wt% rare earths. In this alloy, Zr may be present in an amount of 0.05-1.0wt%, or the alloy may comprise less than 0.05wt% Zr. Ni is preferably added in an amount of between 0.2% and 7% by weight. It is preferred that the remainder of the alloy is magnesium and incidental impurities.

Also described (but not claimed) is a second magnesium alloy comprising 1-15wt% Al and up to 2wt% in total of Zn and/or Mn. The alloy preferably comprises 2-12wt% Al. Preferably, the alloy comprises 0.2-1.2wt% in total of Zn and/or Mn. Ni is preferably added in an amount of 0.1-3wt%.

In addition, described (but not claimed) is a third magnesium alloy comprising 1-9wt% Zn and optionally one or more of Mn and Zr. The alloy preferably comprises 5-8wt% Zn. Ni is preferably added in an amount of 0.1-5wt%.

The composition of the magnesium alloy, in particular those of the first embodiment, can be tailored to achieve a desired corrosion rate falling in a particular range. The desired corrosion rate in 15% KCl at 93°C can be in any of the following particular ranges: 50-100mg/cm²/day; 100-250mg/cm²/day; 250-500mg/cm²/day; 500-1000mg/cm²/day; 1000-3000mg/cm²/day; 3000-4000 mg/cm²/day; 4000-5000mg/cm²/day; 5000-10,000mg/cm²/day; 10,000-15,000 mg/cm²/day.

The method of producing the alloy may also comprise tailoring compositions of the magnesium alloys, in particular of the first embodiment, such that the cast magnesium alloys achieve desired corrosion rates in 15% KCl at 93°C falling in at least two of the following ranges: 50 to 100mg/cm²/day; 100-250mg/cm²/day; 250-500mg/cm²/day; 500-1000mg/cm²/day; 1000-3000mg/cm²/day; 3000-4000 mg/cm²/day; 4000-5000mg/cm²/day; 5000-10,000mg/cm²/day; and 10,000-15,000 mg/cm²/day.

It is preferred that the corrosion promoting metallic element (ie Ni, Co, Ir, Au, Pd and/or Cu) has a solubility of at least 0.1% by weight in molten magnesium at 850°C. Preferably, the corrosion promoting metallic element has a solubility of at least 0.5% by weight in molten magnesium at 850°C, more preferably at least 1% by weight. In some embodiments, it is preferred that the corrosion promoting metallic element has a solubility of at least 1% by weight in the molten magnesium or magnesium alloy to which it is added.

Preferably the corrosion promoting metallic element (ie Ni, Co, Ir, Au, Pd and/or Cu) has a solubility of less than 0.1% by weight, more preferably less than 0.01% by weight, in solid magnesium at 25°C. In some embodiments, it is preferred that the corrosion promoting metallic element has a solubility of less than 0.1% by weight, more preferably less than 0.01% by weight, in the molten magnesium or magnesium alloy to which it is added once it has been cooled to 25°C and solidified.

The corrosion promoting metallic element is one or more of Ni, Co, Ir, Au, Pd or Cu. In some embodiments, Ni is preferred. In relation to compositions of the first embodiment, the corrosion promoting metallic element is added in an amount of between 0.01% and 10% by weight, more preferably between 0.1% and 8% by weight, even more preferably between 0.2% and 7% by weight. In relation to compositions of the second alloy, the corrosion promoting metallic element is preferably added in an amount of between 0.01% and 15% by weight, more preferably between 0.01% and 5% by weight, even more preferably between 0.1% and 3% by weight. In relation to compositions of the third alloy, the corrosion promoting metallic element is preferably added in an amount of between 0.01% and 10% by weight, more preferably 0.01% and 7% by weight, even more preferably between 0.1% and 5% by weight.

A particularly preferred method comprises melting in step (a) a magnesium alloy comprising 3.3-4.3wt% Y, 0.2-1.0wt% Zr, 2.0-2.5wt% Nd and optionally 0.3-1.0wt% rare earths, and adding in step (b) Ni as the corrosion promoting metallic element. It is preferred that in step (b) Ni is added in an amount of between 0.01% and 10% by weight, more preferably between 0.1% by weight and 8% by weight.

Also described (but not claimed) is a magnesium alloy suitable for use as a corrodible downhole article which is obtainable by the method described above.

In addition, described (but not claimed) is a magnesium alloy as described above for use as a corrodible downhole article.

This invention also relates to a method of hydraulic fracturing comprising the use of a corrodible downhole article comprising the magnesium alloy as described above, or a downhole tool as described above. Preferably, the method comprises forming an at least partial seal in a borehole with the corrodible downhole article. The method may then comprise removing the at least partial seal by permitting the corrodible downhole article to corrode. This corrosion can occur at a desired rate with certain alloy compositions of the disclosure as discussed above. It is preferred that the corrodible downhole article is a fracking ball, plug, packer or tool assembly. The fracking ball is preferably substantially spherical in shape. In some embodiments, the fracking ball consists essentially of the magnesium alloy described above.

This invention will be further described by reference to the following Figures which is not intended to limit the scope of the invention claimed, in which:
**Figure 1** shows a microstructure of sample DF9905D of Example 1,
**Figure 2** shows a graph of % loss in proof stress against Ni addition (wt%) for the alloys of Examples 3A, 3B and 3C,
**Figure 3** shows a graph of proof stress against Ni addition (wt%) for the alloys of Examples 3A, 3B and 3C, and
**Figure 4** shows a graph of corrosion rate against Ni addition (wt%) for the alloys of Examples 3A, 3B and 3C.

### Examples

### Example 1 - Magnesium Aluminium Alloy (not of the invention)

A base magnesium alloy consisting of the commercial alloy AZ80A which has a typical chemical composition of 8.5wt% Al, 0.5wt% Zn and 0.3wt% Mn, was melted by heating to 750°C and nickel was added to it in amounts ranging between 0.01% wt to 1% wt. The product was then cast into a billet and extruded into a rod.

In order to simulate the mild and extreme corrosion performance in a well, the material was corrosion tested by measuring weight loss in an aqueous solution of 3wt% potassium chloride at a constant temperature of 38°C (100F) and 15wt% potassium chloride aqueous solution at a constant temperature of 93°C (200F).

The corrosion rates are shown in Table 1 below. The samples comprise the standard alloy (ie AZ80A without nickel added), and two samples with different amounts of nickel added.

**Table 1**

| Sample ID | Nickel concentration Wt% | Corrosion rate in 3% KCL at 38°C (100F) Mg/cm²/day | Corrosion rate in 15% KCL at 93°C (200F) Mg/cm²/day |
|---|---|---|---|
| Standard alloy | <0.005 | <0.5 | <0.5 |
| DF9905B | 0.016 | 113 | 449 |
| DF9905D | 0.61 | 161 | 1328 |

The data in Table 1 clearly shows the increased corrosion level achieved in the samples to which nickel has been added, with a higher nickel content resulting in a higher corrosion rate.

The mechanical properties of the samples were also tested using standardised tension tests (ie ASTM B557-10), and the results are shown in Table 2 below.

**Table 2**

| Sample ID | Nickel concentration Wt% | 0.2% Proof Strength MPa | UTS MPa | Elongation % |
|---|---|---|---|---|
| Standard alloy | <0.005 | 219 | 339 | 9 |
| DF9905B | 0.016 | 238 | 334 | 11 |
| DF9905D | 0.61 | 219 | 309 | 14 |

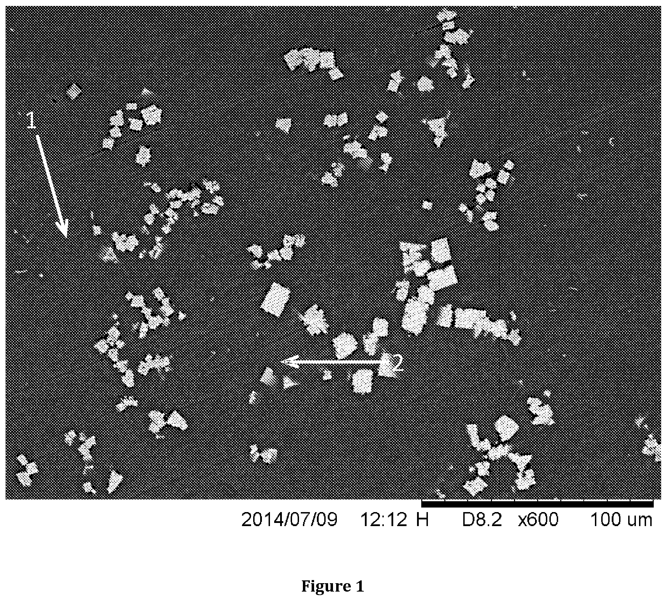

Figure 1 shows a microstructure of sample DF9905D (ie 0.61wt% nickel). The dark area of the microstructure, labelled "1", is the α-Mg phase (ie the phase comprising magnesium in solid solution with the other alloying elements). The light area of the microstructure, an example of which is labelled "2", is the phase comprising the corrosion promoting element (ie nickel in this case) and magnesium.

### Example 2 - Magnesium Yttrium Rare Earth Alloy

The procedure of Example 1 was repeated, but with the base magnesium alloy AZ80A being replaced by commercial alloy Elektron 43. A WE43C alloy was used with a composition of 3.7-4.3wt% Y, 0.2-1.0wt% Zr, 2.0-2.5wt% Nd and 0.3-1.0wt% rare earths.

The corrosion rates are shown in Table 3 below. The samples comprise the standard alloy (ie WE43C without nickel added), and five samples with different amounts of nickel added.

**Table 3**

| Sample ID | Nickel concentration Wt % | Corrosion rate in 3% KCl at 38°C (100F) Mg/cm²/day | Corrosion rate in 15% KCl at 93°C (200F) Mg/cm²/day |
|---|---|---|---|
| Standard alloy | <0.005 | <0.5 | <0.5 |
| DF9911D | 0.1 | <0.5 | 94 |
| DF9912A | 0.2 | 78 | 308 |
| DF9912B | 0.4 | 199 | 643 |
| DF9912C | 0.62 | 203 | 929 |
| DF9915C | 0.65 | 302 | 1075 |
| DF9915D | 1.43 | 542 | 1811 |

The data in Table 3 clearly shows the increased corrosion level achieved in the samples to which nickel has been added, with a higher nickel content resulting in a higher corrosion rate.

The mechanical properties of these samples were also tested using standardised tension tests, and the results are shown in Table 4 below.

**Table 4**

| Sample ID | Nickel concentration Wt% | 0.2% Proof Strength MPa | UTS MPa | Elongation % |
|---|---|---|---|---|
| Standard alloy | <0.005 | 186 | 301 | 15 |
| DF9911D | 0.1 | 197 | 302 | 17 |
| DF9912A | 0.2 | 234 | 337 | 15 |
| DF9912B | 0.4 | 238 | 331 | 14 |
| DF9912C | 0.62 | 230 | 311 | 11 |
| DF9915C | 0.65 | 224 | 305 | 21 |
| DF9915D | 1.43 | 229 | 321 | 20 |

The data in Table 4 shows that alloys of the invention have improved mechanical properties, in particular 0.2% proof strength, when compared to prior art compositions.

### Example 3A - Magnesium Aluminium Alloys (not of the invention)

Further magnesium alloy compositions were prepared by combining the components in the amounts listed in Table 5 below (the balance being magnesium). These compositions were then melted by heating at 750°C. The product was then cast into a billet and extruded to a rod.

**Table 5**

| Mg-Al | Alloy Additions (wt%, balance magnesium) | | | | | |
|---|---|---|---|---|---|---|
| Sample ID | Al | Ca | Sn | Zn | Mn | Ni |
| A1 | 8.4 | | | 0.4 | 0.2 | 0.00 |
| A2 | 8.4 | | | 0.4 | 0.2 | 0.02 |
| A3 | 8.4 | | | 0.4 | 0.2 | 0.15 |
| A4 | 8.4 | | | 0.4 | 0.2 | 1.50 |
| A5 | 6.5 | | | 0.7 | 0.3 | 0.00 |
| A6 | 6.5 | | | 0.7 | 0.3 | 0.05 |
| A7 | 6.5 | | | 0.7 | 0.3 | 0.15 |
| A8 | 6.5 | | | 0.7 | 0.3 | 0.30 |
| A9 | 6.5 | | | 0.7 | 0.3 | 0.60 |
| A10 | 6.5 | | | 0.7 | 0.3 | 1.20 |
| A11 | 3.0 | | | 0.7 | 0.3 | 0.00 |
| A12 | 3.0 | | | 0.7 | 0.3 | 0.05 |
| A13 | 3.0 | | | 0.7 | 0.3 | 0.15 |
| A14 | 3.0 | | | 0.7 | 0.3 | 0.30 |
| A15 | 3.0 | | | 0.7 | 0.3 | 0.60 |
| A16 | 3.0 | | | 0.7 | 0.3 | 1.20 |
| A17 | 3.5 | 3.0 | | 0.0 | 0.3 | 0.00 |
| A18 | 4.0 | 5.0 | | 0.0 | 0.5 | 0.15 |
| A19 | 4.0 | 3.6 | | 0.0 | 0.4 | 0.50 |
| A20 | 3.5 | 3.0 | | 0.0 | 0.3 | 2.00 |
| A21 | 8.0 | | 4.0 | 2.0 | 0.3 | 0.00 |
| A22 | 8.0 | | 4.0 | 2.0 | 0.3 | 0.15 |

The mechanical properties of these samples were also tested using the same standardised tension tests, and the results are shown in Table 6 below.

**Table 6**

| Alloy class: Mg-Al | | | |
|---|---|---|---|
| Sample ID | 0.2 % Proof Strength (MPa) | Percentage Proof Strength remaining (%) | Corrosion Rate in 15% KCl at 93°C (200F) (mg/cm²/day) |
| A1 | 219 | 100 | 0 |
| A2 | 239 | 109 | 449 |
| A3 | 235 | 107 | 1995 |
| A4 | 220 | 101 | 1328 |
| A5 | 199 | 100 | 0 |
| A6 | 197 | 99 | 2078 |
| A7 | 203 | 102 | 2531 |
| A8 | 198 | 99 | 2800 |
| A9 | 197 | 99 | 2574 |
| A10 | 199 | 100 | 2494 |
| A11 | 211 | 100 | 0 |
| A12 | 196 | 93 | 1483 |
| A13 | 192 | 91 | 1853 |
| A14 | 194 | 92 | 1854 |
| A15 | 197 | 94 | 1969 |
| A16 | 194 | 92 | 1877 |
| A17 | 321 | 100 | 0 |
| A18 | 329 | 102 | 3299 |
| A19 | 312 | 97 | 4851 |
| A20 | 309 | 96 | 2828 |
| A21 | 258 | 100 | 0 |
| A22 | 256 | 99 | 1205 |

This data shows that the addition of nickel to these magnesium-aluminium alloys significantly increases the corrosion rate of the alloys. Advantageously, for these alloys this increase in corrosion rate is provided whilst maintaining the mechanical properties of the alloy (as exemplified by the 0.2% proof strength). Thus, the alloys tested in this example can find use as components in downhole tools due to their combination of high corrosion rates and good mechanical properties.

### Example 3B - Magnesium Yttrium Rare Earth Alloys

Further magnesium alloy compositions were prepared by combining the components in the amounts listed in Table 7 below. These compositions were then melted by heating at 750°C. The product was then cast into a billet and extruded to a rod.

**Table 7**

| Mg-Y-RE | Alloy Additions (wt%, balance Mg) | | | |
|---|---|---|---|---|
| Sample ID | Y | Nd | Zr | Ni |
| R1 | 4.0 | 2.2 | 0.5 | 0.0 |
| R2 | 3.6 | 2.1 | 0.5 | 0.4 |
| R3 | 3.6 | 2.1 | 0.5 | 0.6 |
| R4 | 3.6 | 2.1 | 0.5 | 1.4 |
| R5 | 3.5 | 2.1 | 0.4 | 1.8 |
| R6 | 3.5 | 2.1 | 0.4 | 3.5 |
| R7 | 3.5 | 2.1 | 0.4 | 5.0 |
| R8 | 3.5 | 2.1 | 0.4 | 6.1 |
| R9 | 3.7 | 2.1 | 0.0 | 0.4 |
| R10 | 3.7 | 2.1 | 0.0 | 0.6 |
| R11 | 3.6 | 2.1 | 0.1 | 1.5 |
| R12 | 3.9 | 2.0 | 0.0 | 1.1 |
| R13 | 3.5 | 1.8 | 0.0 | 2.2 |

The mechanical properties of these samples were tested using standardised tension tests, and the results are shown in Table 8 below.

**Table 8**

| Alloy Class: Mg-Y-RE | | | |
|---|---|---|---|
| Sample ID | 0.2 % Proof Strength (MPa) | Percentage Proof Strength remaining (%) | Corrosion Rate in 15% KCl at 93°C (200F) (mg/cm²/day) |
| R1 | 241 | 100 | 0.0 |
| R2 | 229 | 95 | 198.6 |
| R3 | 235 | 97 | 578.5 |
| R4 | 234 | 97 | 1302.3 |
| R5 | 238 | 99 | 2160.0 |
| R6 | 263 | 109 | 6060.8 |
| R7 | 253 | 105 | 7175.7 |
| R8 | 232 | 96 | 7793.1 |
| R9 | 221 | 92 | 636.0 |
| R10 | 217 | 90 | 937.0 |
| R11 | 206 | 85 | 1115.0 |
| R12 | 209 | 87 | 1118.0 |
| R13 | 256 | 106 | 3401.0 |

This data shows that, as for the magnesium-aluminium alloys, the addition of nickel to these magnesium-yttrium-rare earth alloys significantly increases the corrosion rate of the alloy. Advantageously, for these alloys this increase in corrosion rate is provided whilst maintaining the mechanical properties of the alloy (as exemplified by the 0.2% proof strength). However, in addition to these advantageous properties, for these alloys the increase in corrosion rate is substantially proportional to the amount of added nickel. This can provide the further feature that the corrosion rate of these alloys is therefore "tunable" and alloys with specific desirable corrosion rates, or ranges of particular corrosion rates, can be produced. Thus, the alloys tested in this example can find use as components in downhole tools due to their combination of high corrosion rates and good mechanical properties.

### Example 3C - Magnesium Zinc Alloys (not of the invention)

Magnesium alloy compositions were prepared by combining the components in the amounts listed in Table 9 below. These compositions were then melted by heating at 750°C. The product was then cast into a billet and extruded to a rod.

**Table 9**

| Mg-Zn | Alloy Additions (wt%, balance Mg) | | | | |
|---|---|---|---|---|---|
| Sample ID | Zn | Cu | Mn | Zr | Ni |
| Z1 | 6.5 | 1.5 | 0.8 | | 0.00 |
| Z2 | 6.5 | 1.5 | 0.8 | | 1.00 |
| Z3 | 6.5 | 1.5 | 0.8 | | 2.00 |
| Z4 | 6.5 | 1.5 | 0.8 | | 4.00 |
| Z5 | 6.5 | | | 0.5 | 0.00 |
| Z6 | 6.5 | | | | 0.15 |
| Z7 | 6.5 | | | | 0.30 |
| Z8 | 6.5 | | | | 1.00 |

The mechanical properties of these samples were tested using standardised tension tests, and the results are shown in Table 10 below.

**Table 10**

| Alloy Class: Mg-Zn | | | |
|---|---|---|---|
| Sample ID | 0.2 % Proof Strength (MPa) | Percentage Proof Strength remaining (%) | Corrosion Rate in 15% KCl at 93°C (200F) (mg/cm²/day) |
| Z1 | 312 | 100 | 50 |
| Z2 | 229 | 73 | 315 |
| Z3 | 229 | 73 | 5474 |
| Z4 | 216 | 69 | 9312 |
| Z5 | 223 | 100 | 1 |
| Z6 | 133 | 59 | 565 |
| Z7 | 137 | 62 | 643 |
| Z8 | 142 | 63 | 905 |

This data shows that, as for the magnesium-aluminium and magnesium-yttrium-rare earth alloys, the addition of nickel to these magnesium-zinc alloys significantly increases their corrosion rate. Magnesium-zinc alloys are known in the art to have high strength values and it is shown in the disclosure that the addition of nickel also increases their corrosion rate. However, the data demonstrates that the mechanical properties of these alloys (as exemplified by the 0.2% proof strength) decrease with increasing nickel content.

This example shows that not all magnesium alloys provide the mechanical strength required for certain uses of the invention when nickel is added to them, and that it is in fact difficult to predict how the properties of a particular alloy will be altered when a corrosion promoting element such as nickel is added.

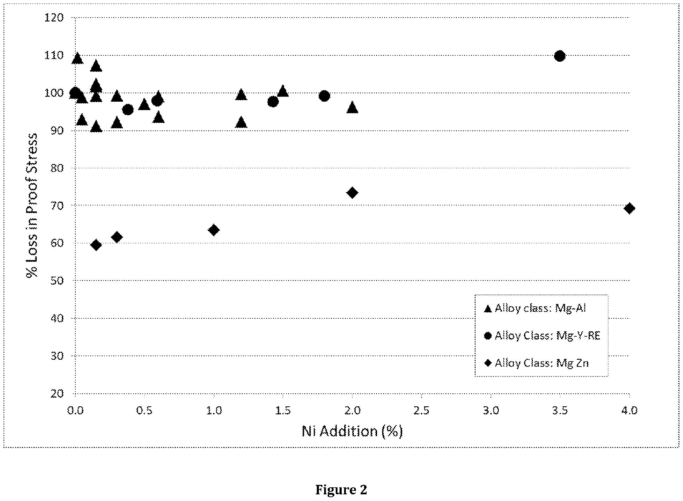

In Figures 2, 3 and 4 the mechanical properties of the alloys of Examples 3A, 3B and 3C, have been plotted against the Ni addition (wt%).

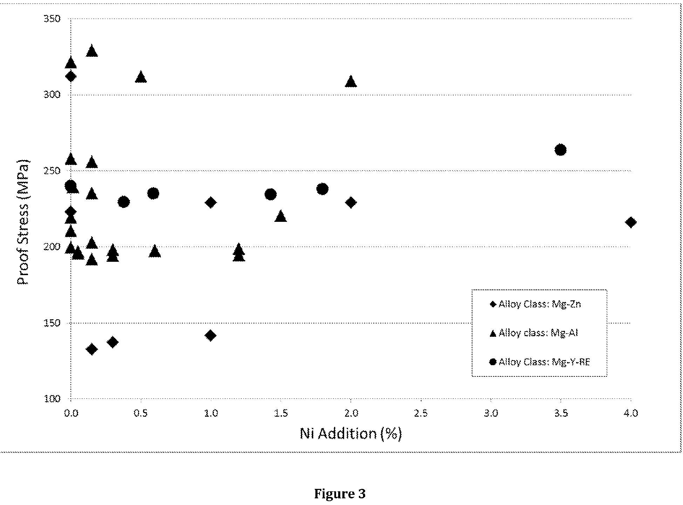

Figure 2 in particular shows that for the magnesium-zinc alloys of Example 3C ("Mg-Zn", where zinc is the major strengthening element), between 20% and 40% of the strength is lost when nickel is added. In contrast, the strength of the magnesium-aluminium ("Mg-Al") and magnesium-yttrium-rare earth (Mg-Y-RE) alloys (Examples 3A and 3B) is maintained. Figure 3 is a plot showing the absolute proof strength values (MPa) against Ni addition (wt%).

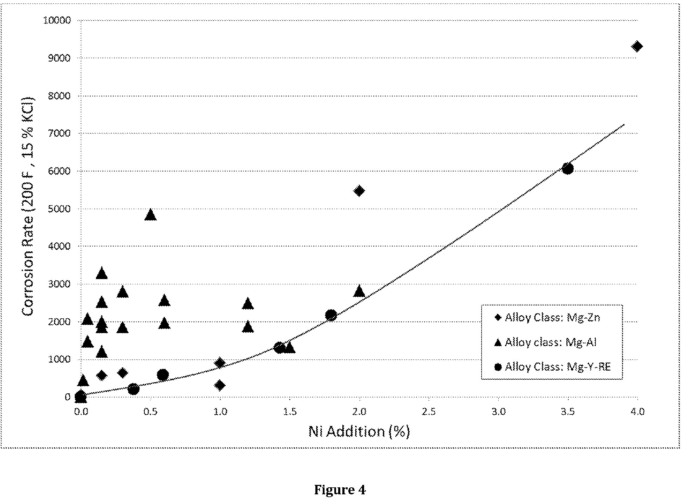

Figure 4 is a plot of corrosion rate against Ni addition (wt%). For the magnesium-yttrium-rare earth alloys, a line has been drawn through the data points which demonstrates the correlation between corrosion rate and Ni addition for these alloys. This shows that the magnesium-yttrium rare earth alloys advantageously can be tailored to achieve a desired specific corrosion rate or range of corrosion rates.

## Claims

1. A corrodible downhole article comprising a magnesium alloy, the magnesium alloy comprising:
(a) 0.01-10wt% of one or more of Ni, Co, Ir, Au, Pd or Cu,
(b) 1-10wt% Y,
(c) 1-15wt% of at least one rare earth metal other than Y, and
(d) 0-1wt% Zr,
wherein the remainder of the alloy is magnesium and incidental impurities, and wherein the alloy has a corrosion rate of at least 50mg/cm²/day in 15% KCl at 93°C and a 0.2% proof strength of at least 50MPa when tested using standard tensile test method ASTM B557-10.

2. A corrodible downhole article as claimed in claim 1, wherein the magnesium alloy has a corrosion rate of at least 75mg/cm²/day in 15% KCl at 93°C.

3. A corrodible downhole article as claimed in either claim 1 or claim 2, wherein the magnesium alloy has a 0.2% proof strength of at least 150MPa when tested using standard tensile test method ASTM B557-10.

4. A corrodible downhole article as claimed in any one of the preceding claims , wherein the magnesium alloy comprises 0.1-8wt% Ni.

5. A corrodible downhole article as claimed in any one of the preceding claims, wherein the magnesium alloy comprises Y in an amount of 2.0-6.0wt%, preferably 3.0-5.0wt%.

6. A corrodible downhole article as claimed in any one of the preceding claims, wherein the magnesium alloy comprises at least one rare earth metal other than Y in an amount of 1.5-5.0wt%.

7. A corrodible downhole article as claimed in any one of the preceding claims, wherein the at least one rare earth metal other than Y is Nd.

8. A corrodible downhole article as claimed in claim 7, wherein the magnesium alloy comprises Nd in an amount of 1.7-2.5wt%.

9. A corrodible downhole article as claimed in any one of the preceding claims, wherein the magnesium alloy comprises Zr in an amount of up to 0.3wt%.

10. A corrodible downhole article as claimed in claim 1, wherein the magnesium alloy comprises 3.3-4.3wt% Y, up to 0.2wt% Zr and 1.7-2.5wt% Nd and optionally 0.3-1.0wt% other rare earths.

11. A corrodible downhole article as claimed in any one of the preceding claims, wherein the corrodible downhole article is a downhole tool.

12. A corrodible downhole article as claimed in claim 11, wherein the downhole tool is a fracking ball, plug, packer or tool assembly.

13. A method of hydraulic fracturing comprising the use of a downhole tool as claimed in either claim 11 or claim 12.

## Patentansprüche

1. Ein korrodierbarer Bohrlochartikel, beinhaltend eine Magnesiumlegierung, wobei die Magnesiumlegierung Folgendes beinhaltet:
(a) zu 0,01-10 Gew.-% eines oder mehrere von Ni, Co, Ir, Au, Pd oder Cu,
(b) zu 1-10 Gew.-% Y,
(c) zu 1-15 Gew.-% mindestens ein Seltenerdmetall, das nicht Y ist, und
(d) zu 0-1 Gew.-% Zr,
wobei der Rest der Legierung Magnesium und zufällige Verunreinigungen sind und wobei die Legierung eine Korrosionsrate von mindestens 50 mg/cm²/Tag in 15 % KCl bei 93 °C und eine 0,2%ige Dehngrenze von mindestens 50 MPa aufweist, wenn sie unter Verwendung des standardmäßigen Zugversuchsverfahrens ASTM B557-10 geprüft wird.

2. Korrodierbarer Bohrlochartikel gemäß Anspruch 1, wobei die Magnesiumlegierung eine Korrosionsrate von mindestens 75 mg/cm²/Tag in 15 % KCl bei 93 °C aufweist.

3. Korrodierbarer Bohrlochartikel gemäß Anspruch 1 oder Anspruch 2, wobei die Magnesiumlegierung eine 0,2%ige Dehngrenze von mindestens 150 MPa aufweist, wenn sie unter Verwendung des standardmäßigen Zugversuchsverfahrens ASTM B557-10 geprüft wird.

4. Korrodierbarer Bohrlochartikel gemäß einem der vorhergehenden Ansprüche, wobei die Magnesiumlegierung 0,1-8 Gew.-% Ni beinhaltet.

5. Korrodierbarer Bohrlochartikel gemäß einem der vorhergehenden Ansprüche, wobei die Magnesiumlegierung Y in einer Menge von 2,0-6,0 Gew.-%, vorzugsweise 3,0-5,0 Gew.-%, beinhaltet.

6. Korrodierbarer Bohrlochartikel gemäß einem der vorhergehenden Ansprüche, wobei die Magnesiumlegierung mindestens ein Seltenerdmetall, das nicht Y ist, in einer Menge von 1,5-5,0 Gew.-% beinhaltet.

7. Korrodierbarer Bohrlochartikel gemäß einem der vorhergehenden Ansprüche, wobei das mindestens eine Seltenerdmetall, das nicht Y ist, Nd ist.

8. Korrodierbarer Bohrlochartikel gemäß Anspruch 7, wobei die Magnesiumlegierung Nd in einer Menge von 1,7-2,5 Gew.-% beinhaltet.

9. Korrodierbarer Bohrlochartikel gemäß einem der vorhergehenden Ansprüche, wobei die Magnesiumlegierung Zr in einer Menge von bis zu 0,3 Gew.-% beinhaltet.

10. Korrodierbarer Bohrlochartikel gemäß Anspruch 1, wobei die Magnesiumlegierung 3,3-4,3 Gew.-% Y, bis zu 0,2 Gew.-% Zr und 1,7-2,5 Gew.-% Nd und optional 0,3-1,0 Gew.-% andere seltene Erden beinhaltet.

11. Korrodierbarer Bohrlochartikel gemäß einem der vorhergehenden Ansprüche, wobei der korrodierbare Bohrlochartikel ein Bohrlochwerkzeug ist.

12. Korrodierbarer Bohrlochartikel gemäß Anspruch 11, wobei das Bohrlochwerkzeug eine Kugel-, Stopfen-, Packer- oder Werkzeuganordnung für das Fracking ist.

13. Ein Verfahren zur hydraulischen Frakturierung, das die Verwendung eines Bohrlochwerkzeugs gemäß Anspruch 11 oder Anspruch 12 beinhaltet.

## Revendications

1. Un article corrodable de fond de trou comprenant un alliage de magnésium, l'alliage de magnésium comprenant :
(a) de 0,01 à 10 % en poids d'un ou de plusieurs éléments parmi Ni, Co, Ir, Au, Pd ou Cu,
(b) de 1 à 10 % en poids de Y,
(c) de 1 à 15 % en poids d'au moins un métal des terres rares autre que Y, et
(d) de 0 à 1 % en poids de Zr,
dans lequel le reste de l'alliage est du magnésium et des impuretés fortuites, et
dans lequel l'alliage a une vitesse de corrosion d'au moins 50 mg/cm²/jour dans du KCl à 15 % à 93 °C et une résistance à la charge d'épreuve de 0,2 % d'au moins 50 MPa quand il est soumis à un essai à l'aide de la méthode d'essai de traction normalisée ASTM B557-10.

2. Un article corrodable de fond de trou tel que revendiqué dans la revendication 1, dans lequel l'alliage de magnésium a une vitesse de corrosion d'au moins 75 mg/cm²/jour dans du KCl à 15 % à 93 °C.

3. Un article corrodable de fond de trou tel que revendiqué soit dans la revendication 1, soit dans la revendication 2, dans lequel l'alliage de magnésium a une résistance à la charge d'épreuve de 0,2 % d'au moins 150 MPa quand il est soumis à un essai à l'aide de la méthode d'essai de traction normalisée ASTM B557-10.

4. Un article corrodable de fond de trou tel que revendiqué dans n'importe laquelle des revendications précédentes, dans lequel l'alliage de magnésium comprend de 0,1 à 8 % en poids de Ni.

5. Un article corrodable de fond de trou tel que revendiqué dans n'importe laquelle des revendications précédentes, dans lequel l'alliage de magnésium comprend Y dans une quantité allant de 2,0 à 6,0 % en poids, préférablement de 3,0 à 5,0 % en poids.

6. Un article corrodable de fond de trou tel que revendiqué dans n'importe laquelle des revendications précédentes, dans lequel l'alliage de magnésium comprend au moins un métal des terres rares autre que Y dans une quantité allant de 1,5 à 5,0 % en poids.

7. Un article corrodable de fond de trou tel que revendiqué dans n'importe laquelle des revendications précédentes, dans lequel l'au moins un métal des terres rares autre que Y est Nd.

8. Un article corrodable de fond de trou tel que revendiqué dans la revendication 7, dans lequel l'alliage de magnésium comprend Nd dans une quantité allant de 1,7 à 2,5 % en poids.

9. Un article corrodable de fond de trou tel que revendiqué dans n'importe laquelle des revendications précédentes, dans lequel l'alliage de magnésium comprend Zr dans une quantité allant jusqu'à 0,3 % en poids.

10. Un article corrodable de fond de trou tel que revendiqué dans la revendication 1, dans lequel l'alliage de magnésium comprend de 3,3 à 4,3 % en poids de Y, jusqu'à 0,2 % en poids de Zr et de 1,7 à 2,5 % en poids de Nd et facultativement de 0,3 à 1,0 % en poids d'autres terres rares.

11. Un article corrodable de fond de trou tel que revendiqué dans n'importe laquelle des revendications précédentes, l'article corrodable de fond de trou étant un outil de fond de trou.

12. Un article corrodable de fond de trou tel que revendiqué dans la revendication 11, dans lequel l'outil de fond de trou est un ensemble formant balle, bouchon, packer ou outil d'hydrofracturation.

13. Une méthode de fracturation hydraulique comprenant l'utilisation d'un outil de fond de trou tel que revendiqué soit dans la revendication 11, soit dans la revendication 12.
